# EUROPÄISCHE PATENTSCHRIFT

(11) **EP 3 528 973 B1**
(45) Veröffentlichungstag und Bekanntmachung des Hinweises auf die Patenterteilung: **20.07.2022**
(21) Anmeldenummer: 17791938.8
(22) Anmeldetag: 19.10.2017
(51) Int. Cl.: B08B 15/02, B08B 3/00, B25J 21/02

(54) **REINIGUNGS-, DESINFEKTIONS- UND TROCKNUNGS-ANLAGE**
CLEANING, DISINFECTION AND DRYING SYSTEM
INSTALLATION DE NETTOYAGE, DE DÉSINFECTION ET DE SÉCHAGE

(30) Priorität: 19.10.2016 DE 102016012488
(43) Veröffentlichungstag der Anmeldung: 28.08.2019
(73) Patentinhaber: Belimed Life Science AG, 8583 Sulgen (CH)
(72) Erfinder: WERNER, Patrick, 84453 Mühldorf am Inn (DE)
(74) Vertreter: Hepp Wenger Ryffel AG
(86) Internationale Anmeldenummer: PCT/EP2017/001229
(87) Internationale Veröffentlichungsnummer: WO 2018/072882

(56) Entgegenhaltungen:
- EP-A1- 0 374 047
- EP-A1- 2 492 025
- DE-A1- 2 936 779
- DE-U1-202005 005 902
- FR-A1- 2 842 739
- US-A- 3 372 704
- US-A- 5 273 060

## Beschreibung

Die Erfindung bezieht sich auf eine Reinigungs-, Desinfektions- und TrocknungsAnlage für die Aufbereitung von Zubehörteilen und/oder. allgemeinen Waschgütern insbesondere in der Pharmaproduktion und Medizintechnik, mit einem mit einer Zugangstür versehenen Waschraum, in bzw. an dem Zuführungseinrichtungen für Waschflüsigkeiten und Trocknungsluft an Sprühdüsen und Wascharme mit Sprühdüsen angeordnet sind.

Die Erfindung betrifft eine Reinigungs-, Desinfektions- und Trocknungsanlage mit Isolatorsystem für die Aufbereitung von Zubehörteilen bzw. allgemeinen Waschgütern in der Pharmaproduktion.

Aus der DE 3608776 A1 ist ein kastenförmiges Reinigungsgerät bekannt, das an einer Seitenfläche eine Öffnung aufweist, durch die eine behandschuhte, das zu reinigende Teil haltende Hand in den Innenraum des Behälters hineingreifen kann, wobei zu reinigende Gegenstände in dem Reinigungsgerät mit Hilfe eine Sprüheinrichtung gereinigt werden können, ohne das Infektionsträger an die menschliche Haut des Benutzers oder unkontrolliert in die Umgebung gelangen können. Eine derartige Anordnung ist jedoch bei einer Vielzahl von zu reinigenden Gegenständen in der Anwendung umständlich und weist keine Einrichtungen zum Schutz gegen den Austritt von Infektionsträgern in die Umgebung auf.

Aus der US 4,354,514 ist eine Vorrichtung von Schlauch- oder Ballon-förmigen Gegenständen bekannt, die eine Reinigungs- und Trocknungskammer mit einem Zuluftfilter zur Reinigung der Umgebungsluft und ein Abluftgebläse aufweist. Die zu reinigenden Gegenstände werden auf perforierte Rohre aufgezogen, die mit unter Druck stehendem Reinigungsmittel und Trocknungsluft für die zu reinigenden Gegenstände beaufschlagbar sind. Hierdurch ist sowohl eine Innenals auch eine Außenreinigung der zu reinigenden Gegegstände möglich. Möglichkeiten zur manuellen Handhabung und des Reinigungs- oder Bearbeitungsvorganges sind nicht vorgesehen. Das Dokument US 5,273,060 offenbart eine Reinigungs-, Desinfektions- und Trocknungs-Anlage mit einer mit einer Zugangstür versehenen Waschkammer, in der Zuführungsleitungen für Waschflüssigkeiten und Trocknungsluft an Sprühdüsen und Wascharme mit Sprühdüsen angeordnet sind, mit einem in einer Wand der Waschkammer angeordneten Handschuhträger für sich in die Waschkammer erstreckende Handschuhe, wobei die Zuluft- und Abluft-Führungseinrichtungen zum Aufrechterhalten eines Differenzdruckes zwischen der Waschkammer und einem Arbeitsraum ausgebildet sind.

Das Dokument FR 2,842,739 offenbart eine Reinigungs-, Desinfektions- und TrocknungsAnlage mit einer mit einer Zugangstür versehenen Waschkammer in der Zuführungsleitungen für Waschflüssigkeiten angeordnet sind, wobei die Waschkammer als ein Isolatorsystem ausgebildet ist, mit einem in einer Wand der Waschkammer angeordneten Handschuhträger für sich in die Waschkammer erstreckende Handschuhe.

Der Erfindung liegt die Aufgabe zugrunde, eine Reinigungs-, Desinfektions- und Trocknungs-Anlage der eingangs genannten Art zu schaffen, die allen Reinraumklassen, welche in der Pharmaproduktion oder Medizintechnik Verwendung finden, eingesetzt werden kann.

Diese Aufgabe wird durch die im Anspruch 1 angegebenen Merkmale gelöst.

Vorteilhafte Ausgestaltungen und Weiterbildungen der Erfindung ergeben sich aus den Unteransprüchen.

Bei der erfindungsgemäßen Reinigungs-, Desinfektions- und Trocknungs-Anlage ist der Waschraum als Isolatorsystem ausgebildet ist und weist Waschgut-Träger, mit Filtern versehene Zuluft- und Abluft-Führungseinrichtungen, einen in einer Wand der Waschkammer angeordneten Handschuhträger für sich in die Waschkammer erstreckende Handschuhe zur Manipulation des in der Waschkammer befindlichen Waschgutes auf, wobei die Zuluft- und Abluft-Führungseinrichtungen zum Aufrechterhalten eines Differenzdruckes zwischen der Waschkammer und einem Arbeitsraum ausgebildet sind, in dem die Anlage angeordnet ist,

Mit der Waschkammer können getrennte, mit Filtern versehene, Zuleitungs- und Ableitungseinrichtungen für Waschflüssigkeiten und Trocknungsluft verbunden sein. Der Handschuhträger kann Teil einer Frontscheibe zur Betrachtung der Innenraumes des Waschraums sein.

Die durch eine Tür verschließbare seitliche Zugangsöffnung kann Einrichtungen zur Verbindung mit Materialschleusen für die Be- und Entladung des Waschraumes aufweisen.

Die Materialschleusen können hierbei von dem Waschraum getrennte Be- und Entlüftungseinrichtungen aufweisen

Bei der erfindungsgemäßen Anlage steht der Personenschutz im Vordergrund, was durch ein Zusammenspiel zwischen Reinigungsanlage und Isolatorsystem, d.h. Reinigungs- und Isolatorfunktion in einer einzigen Waschkammer erreicht wird.

Ziel ist es, den Bediener sicher und konsequent vom Produkt beziehungsweise von dessen Herstellung in einem geschlossenen System zu trennen. In Isolatoren, wo zum Beispiel Zytostatika hergestellt werden, herrscht permanenter Unterdruck.

Die Erfindung wird nachfolgend anhand eines in den Zeichnungen dargestellten Ausführungsbeispiels noch näher erläutert.

In der Zeichnung zeigen :
- Figur 1: eine schematische Teilansicht einer bevorzugten Ausführungsform der erfindungsgemäßen Anlage;
- Figur 2: eine teilweise weggebrochene Ansicht der Oberseite einer Ausführungsform der Waschkammer 2;
- Figur 3: eine Ansicht der Oberseite der Waschkammer, auf der ein verstellbarer Düsenstock angeordnet ist.

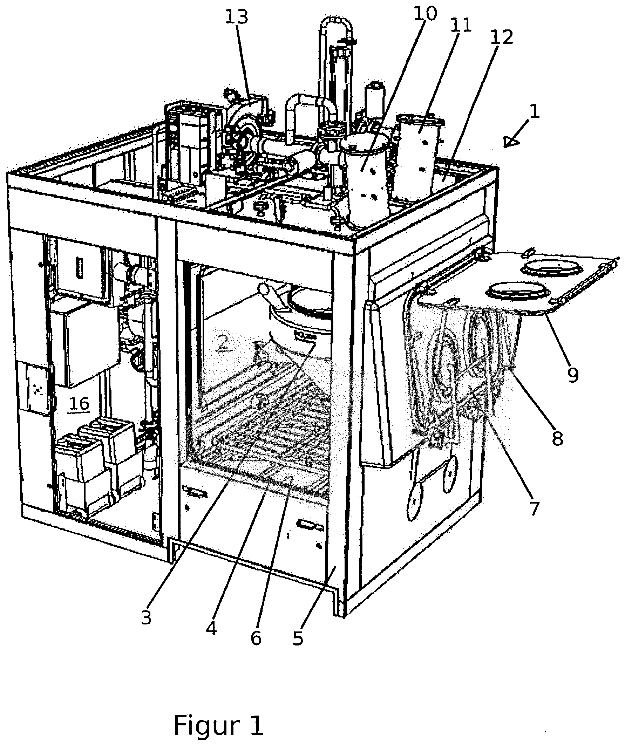

In Figur 1 ist eine schematische Ansicht der Reinigungs-, Desinfektions- und Trocknungs-Anlage 1 gezeigt, Die Anlage 1 weist eine Waschkammer 2 auf, die vorzugsweise aus Edelstahl hergestellt ist und keinen Totraum besitzt, damit sie gut zu reinigen ist. In der Waschkammer 2 ist ein Auflagegitter 4 angeordnet, auf dem ein in einem zunächst hermetisch abgeschlossenen, nur schematisch dargestellten, Behälter 3 enthaltenes Waschgut über ein nicht dargestelltes Zuladungssystem ablegbar ist.

Das Zuladungssystem ist mit einer seitlichen Zugangsöffnung 16 der Waschkammer 2 verbindbar, wobei zwischen der Waschkammer 2 und dem Zuladungssystem eine Materialschleuse vorgesehen sein kann. Die Verbindung zwischen der Waschkammer 2 und dem Zuladungssystem und gegebenfalls der Material-schleuse kann durch geeignete hermetische Dichtungen abgedichtet sein, wobei eine Materialschleuse ein getrenntes Be- und Entlüftungssystem aufweist. An der Frontseite weist die Waschkammer 2 einen Handschuhträger 7 für sich in die Waschkammer erstreckende Handschuhe zur Manipulation des in der Waschkammer befindlichen Waschgutes auf. Der Handschuhträger 7 kann durch eine Glasscheibe gebildet sein, die Rahmen 8 zur Befestigung des offenen Endes jeweiliger Handschuhe trägt. Der Handschuhträger 7, der Rahmen 8 und die Außenumfänge der Handschuhe selbst sind hermetisch gegeneinander abgedichtet. Der Handschuhträger 7 kann bei Nichtgebrauch der Anlage (1) durch eine Abdeckklappe 9 abgedeckt werden.

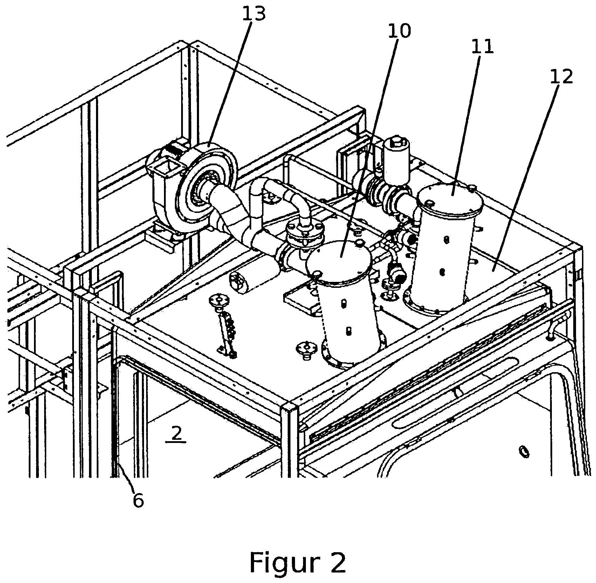

Auf der Oberseite 12 der Waschkammer 2 sind Filterstutzen 10, 11 zur Be- und Entlüftung der Waschkammer 2 angeordnet, wie dies insbesondere aus Figur 2 zu erkennen ist. Von den beiden Filterstutzen 10, 11 ist einer über eine Verbindungsleitung mit dem Ventilator verbunden, während der andere über eine getrennte Verbindungsleitung mit der Außenluft verbunden sein kann. In beiden Verbindungsleitungen können Drosselklappen angeordnet sein die zur Erzielung eines gewünschten Über- oder Unterdruckes in der Waschkammer 2 über Steuereinrichtungen steuerbar sind.

Auf der Oberseite 12 der Waschkammer 2 ist weiterhin eine Dichtungsanordnung 16 für einen in dieser sowohl axial als auch schwenkbar beweglicher Düsenstock 14 angeordnet. Dieser Düsenstock 14 ist mit einer Verbindungsleitung 15 mit der Waschmittel- und Trocknungsluftzufuhr der Waschkammer verbunden und kann unter manueller oder mechanischer Steuerung einen Strahl auf sonst schwierig erreichbare Bereiche des Waschgutes und/oder des dieses zunächst aufnehmenden Behälters zu richten.

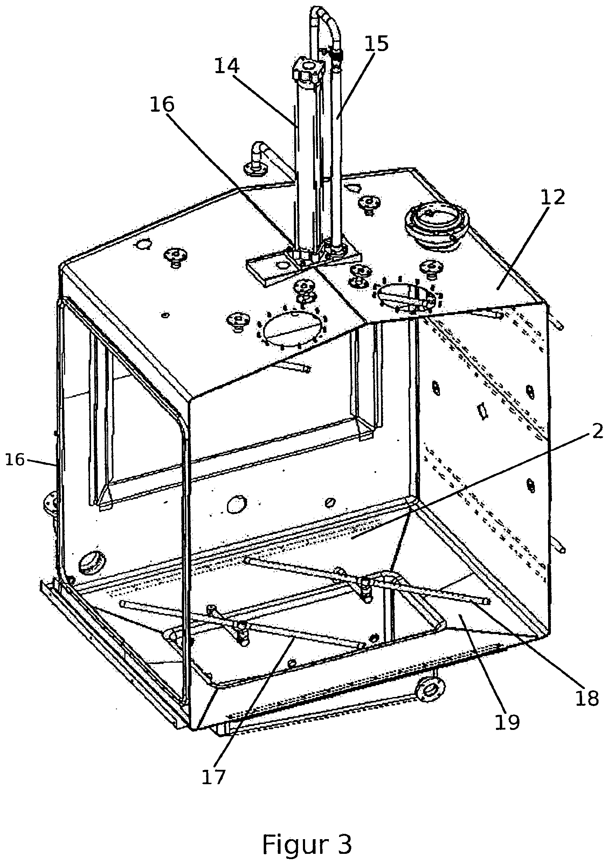

Wie dies weiterhin aus Figur 3 zu erkennen ist, sind im Bereich des Boden 19 der Waschkammer 2 drehbare Wascharme 17, 18 mit auf das auf dem Auflagegitter 4 aufgelegte Waschgut gerichteten Düsen angeordnet. Gleiche oder ähnliche Wascharme können unterhalb der Oberseite 12 der Waschkammer 2 oder auch an deren Seitenflächen angeordnet sein.

Die in den Figuren 1 bis 3 mit 6 bezeichnete seitliche Öffnung der Waschkammer 2 ist vorzugsweise durch eine Schiebetür hermetisch dicht verschließbar.

Die Waschkammer 2 ist in einem Trägergestell 5 angeordnet, das neben der Waschkammer 2 die zu deren Betrieb erforderliche Versorgungseinrichtungen in einer weiteren Kammer 6 trägt.

Der Betrieb der Anlage kann in der nachfolgend beschriebenen Weise erfolgen, die jedoch lediglich ein Beispiel darstellt:
Die vor der seitlichen Öffnung der Waschkammer vollautomatische Schiebetür wird geöffnet, worauf das Zuladungssystem, auf welchem sich das zu reinigende Waschgut befindet, wird in den Waschraum der Maschine positioniert, wobei diese Positionierung gegebenenfalls über eine Materialschleuse vor der seitlichen Öffnung erfolgt.

Das kontaminierte Waschgut ist in einem hermetisch abgeschlossen Behälter angeordnet, so dass eine z.B. hochpotente Verschmutzung nicht mit der Bedienperson in Kontakt kommen kann.

Wurde der Beladevorgang beendet, so wird die automatische Schiebetür an der seitlichen Zugangsöffnung wieder geschlossen, und dieser zugeordnete Türdichtung wird mit Druckluft beaufschlagt. Somit ist die komplette Anlage hermetisch abgeriegelt.

Die Bedienperson kann nun das zu reinigende Waschgut über die an der Frontseite befindlichen Handschuhe demontieren und in die notwendigen Reinigungspositionen platzieren.

Danach kann der Reinigungs-, Dekontaminations- und Trocknungsvorgang gestartet werden.

Nach Beendigung der Dekontaminationszyklen kann z.B. die an der seitlichen Zugangsöffnung angeordnete Schiebetür zur Montage des Waschgutes geöffnet werden, oder Zusammenbau des Waschgutes kann aber alternativ außerhalb des Waschraumes erfolgen.

Der Entladevorgang entspricht dem Beladevorgang wie vor beschrieben.Die vorstehend beschriebene Anlage 1 bzw. deren Waschkammer 2 ist, wie bereits angedeutet, mit einer durch eine elektronische Steuerung steuerbaren Filtertechnik für Umluft, Zu- und Abluft ausgestattet, kann mit Anschlüssen für eine Partikel- und Keimzahlbestimmung ausgerüstet werden, überwacht Luftgeschwindigkeit und Differenzdruck für Filter und Arbeitsraum, besitzt eine Frontscheibe mit Handschuhports sowie Materialschleusen für die Be- und Entladung des durch die Waschkammer gebildeten Isolators mit getrennter Ventilatorentechnik.

Damit ergibt sich eine konsequente Barriere-Technik für ein automatisiertes, validierbares Dekontaminationssystem, das schnelle und hocheffiziente Dekontaminationszyklen ermöglicht und alle Produkt- und Personenschutz-Anforderungen bei der Verarbeitung von hochpotenten Produkten erfüllt.

## Patentansprüche

1. Reinigungs-, Desinfektions- und Trocknungs-Anlage (1) für die Aufbereitung von Zubehörteilen und allgemeinen Waschgütern insbesondere in der Pharmaproduktion und
Medizintechnik, mit einer mit einer Zugangstür versehenen Waschkammer (2), in der Zuführungseinrichtungen für Waschflüssigkeiten und Trocknungsluft an Sprühdüsen und Wascharme mit Sprühdüsen angeordnet sind, wobei die Waschkammer (2) als ein Isolatorsystem ausgebildet ist und Waschgut-Träger (4), mit Filtern (10, 11) versehene Zuluft- und Abluft-Führungseinrichtungen (10 -13), einen in einer Wand der Waschkammer (20) angeordneten Handschuhträger (7) für sich in die Waschkammer erstreckende Handschuhe zur Manipulation des in der Waschkammer (2) befindlichen Waschgutes (3) aufweist, und wobei die Zuluft- und Abluft-Führungseinrichtungen (10 - 13) zum Aufrechterhalten eines Differenzdruckes zwischen der Waschkammer (2) und einem Arbeitsraum ausgebildet sind, in dem die Anlage (1) angeordnet ist, auf der Oberseite (12) der Waschkammer (2) eine Dichtungsanordnung (16) für einen in dieser sowohl axial als auch schwenkbar beweglichen Düsenstock (14) angeordnet ist, der mit einer Verbindungsleitung (15) mit der Waschmittel- und Trocknungsluftzufuhr der Waschkammer (2) verbunden ist und unter manueller oder mechanischer Steuerung zum Richten eines Strahls auf sonst schwierig erreichbare Bereiche des Waschgutes und des dieses zunächst aufnehmenden Behälters ausgebildet ist.

2. Anlage (1) nach Anspruch 1, **dadurch gekennzeichnet, dass** getrennte, mit Filtern versehene Zuleitungs- und Ableitungseinrichtungen für Waschflüssigkeiten und Trocknungsluft mit der Waschkammer (2) verbunden sind.

3. Anlage (1) nach Anspruch 1 oder 2, **dadurch gekennzeichnet, dass** der Handschuhträger Teil einer Frontscheibe zur Betrachtung des Innenraumes der Waschkammer ist

4. Anlage (1) nach einem oder mehreren der vorhergehenden Ansprüche, **dadurch gekennzeichnet, dass** eine durch die Zugangstür verschließbare seitliche Zugangsöffnung (16) Verbindungseinrichtungen
für Materialschleusen für die Be- und Entladung der Waschkammer aufweist.

5. Anlage (1) nach Anspruch 4, **dadurch gekennzeichnet, dass** von den Be- und Entlüftungseinrichtungen der Waschkammer (2) getrennte Be- und Entlüftungseinrichtungen für Materialschleusen vorgesehen sind.

## Claims

1. Cleaning, disinfecting and drying installation (1) for the preparation of accessories and general washing goods, especially in pharmaceutical production and
medical technology, having a washing chamber (2) which is provided with an access door and in which supply devices for washing liquids and drying air are arranged on spray nozzles and washing arms with spray nozzles, the washing chamber (2) being designed as an isolator system, and washing product carriers (4) supply air and exhaust air guide devices (10-13) provided with filters (10, 11), a glove carrier (7) arranged in a wall of the washing chamber (20) for gloves extending into the washing chamber for manipulating the washing goods (3) located in the washing chamber (2) and wherein the supply air and exhaust air guide devices (10 - 13) for maintaining a differential pressure between the washing chamber (2) and a working space in which the installation (1) is arranged, a sealing arrangement (16) for a nozzle holder (14) which is both axially and pivotably movable in the washing chamber (2) is arranged on the upper side (12) thereof which is connected by a connecting pipe (15) to the washing agent and drying air supply of the washing chamber (2) and is designed, under manual or mechanical control, for directing a jet onto otherwise difficult-to-reach areas of the washing goods and on the container initially receiving the washing goods.

2. Installation (1) according to claim 1, **characterized in that** separate supply and discharge devices, provided with filters, for washing liquids and drying air are connected to the washing chamber (2).

3. Installation (1) according to claim 1 or 2, **characterized in that** the glove carrier is part of a front window for viewing the interior of the washing chamber.

4. Installation (1) according to one or more of the preceding claims, **characterized in that** a lateral access opening (16) closable through the access door has connecting devices for material locks for loading and unloading the washing chamber.

5. Installation (1) according to claim 4, **characterized in that** aeration and deaeration devices for material locks are provided separately from the aeration and deaeration devices of the washing chamber (2).

## Revendications

1. Installation de nettoyage, de désinfection et de séchage (1) pour le traitement d'accessoires et de produits à laver en général, en particulier dans la production pharmaceutique et dans l'industrie pharmaceutique et
technique médicale, avec une chambre de lavage (2) pourvue d'une porte d'accès, dans laquelle sont disposés des dispositifs d'amenée pour les liquides de lavage et l'air de séchage sur des buses de pulvérisation et des bras de lavage avec des buses de pulvérisation, la chambre de lavage (2) étant conçue comme un système d'isolateur et des supports de produits à laver (4), des dispositifs de guidage d'air amené et d'air évacué (10 - 13) munis de filtres (10, 11), un support de gants (7) disposé dans une paroi de la chambre de lavage (20) pour des gants s'étendant dans la chambre de lavage pour la manipulation du produit à laver (3) se trouvant dans la chambre de lavage (2), et dans lequel les dispositifs de guidage d'air amené et d'air évacué (10 - 13) sont conçus pour maintenir une pression différentielle entre la chambre de lavage (2) et un espace de travail dans lequel est disposée l'installation (1), un dispositif d'étanchéité (16) pour un porte-buse (14) mobile dans celle-ci aussi bien axialement que de manière pivotante est disposé sur la face supérieure (12) de la chambre de lavage (2), qui est relié par une conduite de liaison (15) à l'alimentation en produit à laver et en air de séchage de la chambre de lavage (2) et qui est conçu, sous commande manuelle ou mécanique, pour diriger un jet sur des zones autrement difficilement accessibles du produit à laver et du récipient qui le reçoit initialement.

2. Installation (1) selon la revendication 1, **caractérisée en ce que** des dispositifs séparés d'amenée et d'évacuation des liquides de lavage et de l'air de séchage, munis de filtres, sont reliés à la chambre de lavage (2).

3. Installation (1) selon la revendication 1 ou 2, **caractérisée en ce que** le support de gants fait partie d'une vitre frontale permettant d'observer l'intérieur de la chambre de lavage.

4. Installation (1) selon une ou plusieurs des revendications précédentes, **caractérisée en ce qu'**une ouverture d'accès latérale (16) pouvant être fermée par la porte d'accès présente des dispositifs de liaison pour des sas de matériel pour le chargement et le déchargement de la chambre de lavage.

5. Installation (1) selon la revendication 4, **caractérisée en ce qu'**il est prévu des dispositifs d'aération et de désaération pour les sas de matériel séparés des dispositifs d'aération et de désaération de la chambre de lavage (2).
